# EUROPÄISCHE PATENTANMELDUNG

(11) **EP 4 722 171 A1**
(43) Veröffentlichungstag der Anmeldung: **08.04.2026**
(21) Anmeldenummer: 25203712.2
(22) Anmeldetag: 22.09.2025
(51) Int. Cl.: C03B 9/16, C03B 9/193

(54) **INVERTMECHANISMUS**

(30) Priorität: 24.09.2024 DE 202024105504 U
(71) Anmelder: T&T Turnov s.r.o., 51101 Turnov (CZ)
(72) Erfinder: Themann, Rolf, 51101 Turnov (CZ); Cymbál, Jan, 51101 Turnov (CZ)
(74) Vertreter: Moser Götze & Partner Patentanwälte mbB

(57) **Zusammenfassung**

Ein Invertmechanismus (1) für eine zumindest eine Vorform aufweisende Glasformmaschine hat zwei Mündungshaltearme, die zwischen einer einen Mündungsbereich eines in der zumindest einen Vorform geformten Külbels halternden Schließstellung und einer diesen Mündungsbereich freigebenden Offenstellung verstellbar sind, eine Zentralwelle (7), mit der die Mündungshaltearme drehfest verbunden sind und um deren Mittelachse die Mündungshaltearme aus einer der zumindest einen Vorform zugeordneten ersten Schwenkstellung in eine einer der zumindest einen Vorform zugeordneten Fertigform zugeordnete zweite Schwenkstellung verschwenkbar sind, und eine Antriebsvorrichtung (19) mit einer Motoreinheit (20), mittels der Antriebsenergie für die Verschwenkung der Mündungshaltearme zwischen ihrer ersten und ihrer zweiten Schwenkstellung erzeugbar ist. Um einen solchen Invertmechanismus (1) zu schaffen, der zum einen in konstruktiv-technisch wenig aufwendiger Weise zusammenstellbar ist und der des Weiteren eine möglichst störungs- und reibungsfreie Übertragung der von der Motoreinheit (20) erzeugten Antriebsenergie auf die Zentralwelle (7) der Antriebsvorrichtung (19) des Invertmechanismus (1) gewährleistet, wird vorgeschlagen, dass die Motoreinheit der Antriebsvorrichtung (19) als Rotationsmotor (20) mit einem Statorglied (25) und einem Rotorglied (21) ausgebildet ist, und dass das Rotorglied (21) des Rotationsmotors (20) axial- und drehfest mit der Zentralwelle (7) der Antriebsvorrichtung (19) verbunden und der Rotationsmotor (20) koaxial in Bezug auf die Zentralwelle (7) der Antriebsvorrichtung (19) angeordnet ist.

## Beschreibung

Die Erfindung bezieht sich auf einen Invertmechanismus für eine zumindest eine Vorform aufweisende Glasformmaschine, mit zwei Mündungshaltearmen, die zwischen einer einen Mündungsbereich eines in der zumindest einen Vorform geformten Külbels halternden Schließstellung und einer diesen Mündungsbereich freigebenden Offenstellung verstellbar sind, einer Zentralwelle, mit der die Mündungshaltearme drehfest verbunden sind und um deren Mittelachse die Mündungshaltearme aus einer der zumindest einen Vorform zugeordneten ersten Schwenkstellung in eine einer der zumindest einen Vorform zugeordneten Fertigform zugeordnete zweite Schwenkstellung verschwenkbar sind, und eine Antriebsvorrichtung mit einer Motoreinheit, mittels der Antriebsenergie für die Verschwenkung der Mündungshaltearme zwischen ihrer ersten und ihrer zweiten Schwenkstellung erzeugbar ist.

Aus dem Stand der Technik sind neben pneumatisch oder hydraulisch angetriebenen Invertmechanismen auch solche Invertmechanismen bekannt, die elektrisch angetrieben werden. Gemeinsam ist den aus dem Stand der Technik bekannten Invertmechanismen, dass die von einer Motoreinheit der Antriebsvorrichtung erzeugte Antriebsenergie über Zahnräder, Ketten, Riemen, Zahnstangen und/oder Getriebe, die zwischengeschaltet sind, auf eine als Stellglied des Invertmechanismus dienende Zentralwelle übertragen werden.

Ausgehend von dem vorstehend geschilderten Stand der Technik liegt der Erfindung die Aufgabe zugrunde, einen Invertmechanismus für eine zumindest eine Vorform aufweisende Glasformmaschine zur Verfügung zu stellen, der zum einen in konstruktivtechnisch wenig aufwendiger Weise zusammenstellbar ist und der des Weiteren eine möglichst störungs- und reibungsfreie Übertragung der von der Motoreinheit erzeugten Antriebsenergie auf die Zentralwelle der Antriebsvorrichtung des Invertmechanismus gewährleistet.

Diese Aufgabe wird erfindungsgemäß dadurch gelöst, dass die Motoreinheit der Antriebsvorrichtung als Rotationsmotor mit einem Statorglied und einem Rotorglied ausgebildet ist, und dass das Rotorglied des Rotationsmotors axial- und drehfest mit der Zentralwelle der Antriebsvorrichtung verbunden und der Rotationsmotor koaxial in Bezug auf die Zentralwelle der Antriebsvorrichtung angeordnet ist. Aufgrund der integrierten Ausgestaltung der Antriebsvorrichtung des erfindungsgemäßen Invertmechanismus verläuft die Rotationsache des Ausgangsglieds des Rotationsmotors koaxial zur Rotationsachse der Zentralwelle der Antriebsvorrichtung des Invertmechanismus und damit koaxial zur Schwenkachse der Mündungshaltearme des Invertmechanismus. Die Rotationsbewegung des Rotorglieds des Rotationsmotors kann sehr präzise in die Schwenkbewegung der Mündungshaltearme umgesetzt werden, wobei diese Schwenkbewegungen quasi schlupffrei erfolgen können. Der erfindungsgemäße Invertmechanismus benötigt keine Bauteile, die in die Station der Glasformmaschine integriert oder unterhalb der Mündungshaltearme an der Station verbaut werden müssten. Hierdurch ergeben sich für den erfindungsgemäßen Invertmechanismus schnelle und wenig aufwendige Montagemöglichkeiten an Stationen von Glasformmaschinen. Der Kraftübertragungsweg zwischen dem Rotorglied des Rotationsmotors einerseits und der Zentralwelle andererseits ist direkt und damit schmutzunempfindlich. Eine Schmierung ist nicht erforderlich.

Im Falle einer besonders zweckmäßigen Weiterbildung des erfindungsgemäßen Invertmechanismus ist das Rotorglied des Rotationsmotors fest mit einem Flansch verbunden, der seinerseits dreh- und axialfest auf der Zentralwelle des Invertmechanismus sitzt. Hierdurch wird die seitens des Rotationsmotors erzeugte Antriebsenergie quasi unmittelbar auf die Zentralwelle übertragen.

Gemäß einer vorteilhaften Weiterbildung des Rotationsmotors der Antriebsvorrichtung des erfindungsgemäßen Invertmechanismus ist dieser Rotationsmotor als Servo Torque Motor, vorzugsweise als Elektro Servo Torque Motor, insbesondere als Elektro Servo Torque Motor in Standardbauweise, ausgebildet.

Um dem erfindungsgemäßen Invertmechanismus einen einfachen und aus einzelnen Modulen zusammenstellbaren Aufbau zu verleihen, ist es vorteilhaft, wenn jeder Mündungshaltearm fest mit einem Schlitten verbunden ist, der drehfest und in Axialrichtung verschieblich auf der Zentralwelle gehaltert ist. Der Austausch defekter Bauteile des Invertmechanismus wird so erheblich erleichtert.

Eine sehr präzise und schlupffreie Übertragung der Rotationsbewegung des Ausgangsglieds des Elektro Servo Torque Motors auf die als Schwenkglied fungierende Zentralwelle des Invertmechanismus ist gewährleistet, wenn der Kraftübertragungsweg zwischen dem Rotorglied des Elektro Servo Torque Motors einerseits und den Mündungshaltearmen andererseits getriebe-, zahnrad-, ketten-, riemen- und zahnstangenfrei ausgebildet ist.

Vorteilhaft ist die Zentralwelle des erfindungsgemäßen Invertmechanismus an ihren beiden Endabschnitten in einer Seitensäule des Invertmechanismus gehaltert. Innerhalb der die Antriebsvorrichtung aufweisenden Seitensäule kann dann der Rotationsmotor angeordnet werden, wobei dieser dann hervorragend gegen äußere Einflüsse geschützt ist.

Jeder Schlitten des erfindungsgemäßen Invertmechanismus ist vorteilhaft mit einer die Zentralwelle der Antriebsvorrichtung in drehfester Verbindung und koaxial umgebenden Schubhülse ausgestaltet.

Gemäß einer weiteren vorteilhaften Weiterbildung des erfindungsgemäßen Invertmechanismus weist jeder Schlitten desselben an seinem dem anderen Schlitten abgewandten Endabschnitt eine Federhalterung auf, in der ein schlittenseitiges Ende einer in Axialrichtung der Zentralwelle wirkenden Feder aufgenommen ist. Eine in dieser Weise an jedem Schlitten aufgenommene und auf diesen Schlitten einwirkende Feder ist geeignet, in konstruktiv wenig aufwendiger Weise eine Vorspannung der Schlitten in Axialrichtung der Zentralwelle zu realisieren.

Hierzu ist zweckmäßigerweise der Federhalterung jedes Schlittens eine Federendkappe zugeordnet, in der ein schlittenfernes Ende der Feder gehaltert ist und die dreh- und axialfest auf der Zentralwelle gehaltert ist. Wenn die dem Rotationsmotor zugewandte Federendkappe fest mit dem Rotorglied des Rotationsmotors verbunden ist, kann auch über diese Federendkappe im Rotationsmotor erzeugte Antriebsenergie quasi verlustfrei auf die Zentralwelle des Invertmechanismus übertragen werden.

Zwischen dem Rotationsmotor und der Zentralwelle der Antriebsvorrichtung ist vorteilhaft ein Rotationslager, vorzugsweise ein Kugellager, angeordnet.

Um die Axialbewegungen der Schlitten zu begrenzen, ist es vorteilhaft, wenn auf der Außenumfangsfläche jeder Federendkappe ein Anschlagglied ausgebildet ist. Die Anordnung der Anschlagglieder an den Federendkappen ist so gewählt, dass beim Erreichen der Anschlagstellung die beiden Schlitten in der Offenstellung der Mündungshaltearme sind.

Um die Anpassbarkeit des erfindungsgemäßen Invertmechanismus an unterschiedlich gestaltete Stationen von Glasformmaschinen zu erleichtern, ist es vorteilhaft, wenn die beiden Schlitten des Invertmechanismus mit Mündungshaltearmeneinsätzen verbindbar sind, die miteinander eine, zwei, drei, vier oder fünf Mündungshalteringe ausbilden. Selbstverständlich können bei der Ausgestaltung der Mündungshaltearmeinsätze auch unterschiedliche Abstände zwischen den an der betreffenden Station vorgesehenen Vor- und Fertigformen berücksichtigt werden.

Durch die wie vorstehend beschrieben modulartige Zusammensetzbarkeit des erfindungsgemäßen Invertmechanismus ist gewährleistet, dass defekte Bauteile desselben mit einem im Vergleich zum Stand der Technik erheblich verringertem Aufwand austauschbar sind. Ursächlich hierfür ist auch, dass keines der Bauteile des erfindungsgemäßen Invertmechanismus in oder unter die Station einer Glasformmaschine eingebaut ist. Des Weiteren sind aufgrund der modularen Zusammenstellung des erfindungsgemäßen Invertmechanismus Adaptionen desselben an unterschiedliche Anforderungsprofile mit einem vergleichsweise geringen Aufwand möglich. Die Anzahl der Bauteile des erfindungsgemäßen Invertmechanismus ist im Vergleich zum Stand der Technik erheblich reduziert. Die Anzahl und der Abstand der an den Mündungshaltearmen zu realisierenden Mündungshalteringe kann mit einem geringen Aufwand an jedes gewünschte Anforderungsprofil adaptiert werden.

Wenn dem Elektro Servo Torque Motor des erfindungsgemäßen Invertmechanismus ein Encoder bzw. ein Inkrementgeber zugeordnet ist, mittels dem während der gesamten Schwenkbewegung der Mündungshaltearme des Invertmechanismus dessen genaue Winkelstellung und die Schwenkgeschwindigkeit der Mündungshaltearme erfassbar sind, können die während einer solchen Schwenkbewegung erfassten Daten auf die Einhaltung von Soll- und/oder Grenzwerten überprüft werden.

Wenn der Encoder an eine Steuervorrichtung der Glasformmaschine angeschlossen ist, mittels der die Schwenkbewegung der Mündungshaltearme des Invertmechanismus regelbar ist, kann unter Berücksichtigung der vom Encoder erfassten Daten jeweils eine ggf. erforderliche Anpassung der Schwenkbewegung der Mündungshaltearme vollzogen werden. Darüber hinaus kann im Betrieb des erfindungsgemäßen Invertmechanismus mit gleichbleibender Kraft jeder beliebige Drehwinkel zwischen 0 Grad und 180 Grad gefahren werden. Die Schwenkbewegungen der Mündungshaltearme können für jedes Anforderungsprofil adäquat gesteuert, überwacht und abgespeichert werden.

Die Verstellung der beiden Schlitten und damit der Mündungshaltearme aus deren Schließ- in deren Offenstellung ist mit einem vergleichsweise geringen technischkonstruktiven Aufwand realisierbar, wenn Radialstufen der Zentralwelle zugeordnete Stirnwände der Schlitten durch in der Zentralwelle ausgebildete Bohrungen mit Druckluft beaufschlagbar sind, um die Schlitten in Axialrichtung der Zentralwelle gegen die Kraft der Federn in Richtung auf die Anschläge zu verschieben.

Um eine gleichmäßige Bewegung beider Schlitten in jedem Fall zu gewährleisten, ist es vorteilhaft, wenn die Zentralwelle an beiden Enden an eine Druckluftwelle angeschlossen ist.

Beim erfindungsgemäßen Invertmechanismus ist dessen drehbar gelagerte Schwenkachse koaxial zum Ausgangsglied eines Servo Torque Motors ausgebildet. Da eine feste Verbindung zwischen dem Rotorglied des Servo Torque Motors einerseits und den Mündungshaltearmen des Invertmechanismus andererseits vorliegt, lässt sich für den Invertmechanismus eine hohe mechanische Festigkeit erreichen, wobei darüber hinaus die seitens des Invertmechanismus durchzuführenden Schwenkbewegungen mit einer hohen Präzision durchgeführt werden können. Da es auf dem Kraftübertragungsweg zwischen dem quasi einstückig in den Invertmechanismus integrierten Rotorglied des Servo Torque Motors und den Mündungshaltearmen kein Spiel gibt, sind hohe Genauigkeiten bei der Schwenkbewegung der Mündungshaltearme erreichbar.

Der erfindungsgemäße Invertmechanismus ist gegenüber Schlägen oder Kollisionen wenig anfällig, da er keine Getriebe oder andere starr verbaute Bauteile enthält. Entsprechend kann dieser Invertmechanismus aufgrund seiner flexiblen Lagerung solche Kollisionen aufnehmen.

Gemäß einer vorteilhaften Weiterbildung des erfindungsgemäßen Invertmechanismus hat dessen Antriebsvorrichtung zwei Motoreinheiten, von denen jede vorzugsweise an einem der beiden axialen Endabschnitte der Zentralwelle angeordnet ist. Hierdurch lässt sich eine gleichmäßigere Beaufschlagung der Zentralwelle mit Antriebsenergie realisieren, was eine erhöhte Lebensdauer der Zentralwelle und ihrer Lagerung etc. zur Folge haben kann. Selbstverständlich kann diese zweite Motoreinheit sämtliche der vorstehend geschilderten technischen Merkmale der ersten Motoreinheit aufweisen, wobei auch deren Integration in die Antriebsvorrichtung bzw. in den Invertmechanismus analog gestaltet sein kann.

Wenn die Seitensäulen des erfindungsgemäßen Invertmechanismus an ihrem oberen Bereich jeweils ein abschraubbares Deckelteil aufweisen, ergibt sich eine erhebliche Erleichterung bei einem etwaig erforderlichen Austausch der Zentralwelle des Invertmechanismus und bei anderen Service-, Wartungs- und Reparaturmaßnahmen.

Im Folgenden wird die Erfindung anhand einer Ausführungsform unter Bezugnahme auf die Zeichnung näher erläutert. Es zeigen:
Figur 1 eine perspektivische Vorderansicht einer Ausführungsform eines erfindungsgemäßen Invertmechanismus für eine Glasformmaschine;
Figur 2 eine Vertikalschnittdarstellung der in Figur 1 gezeigten Ausführungsform des erfindungsgemäßen Invertmechanismus; und
Figur 3 eine perspektivische Vorderansicht einer zweiten Ausführungsform des erfindungsgemäßen Invertmechanismus.

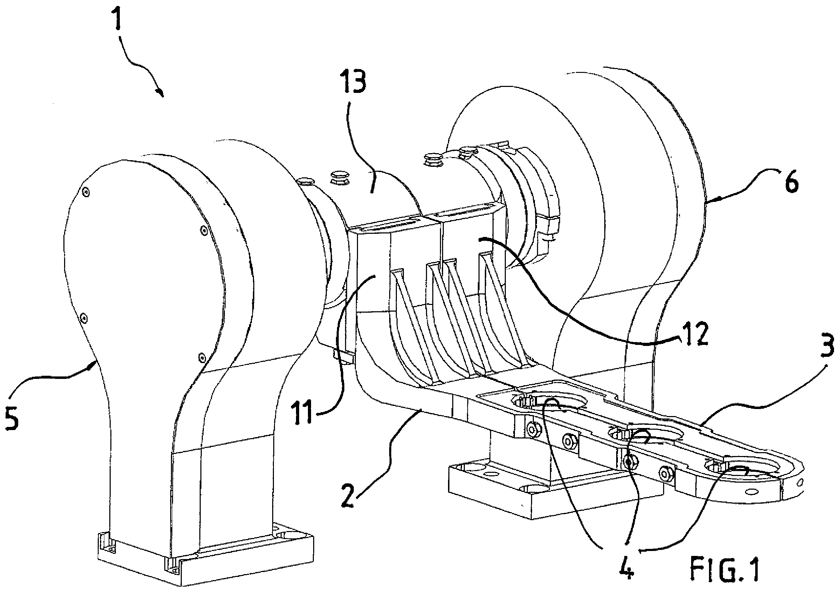

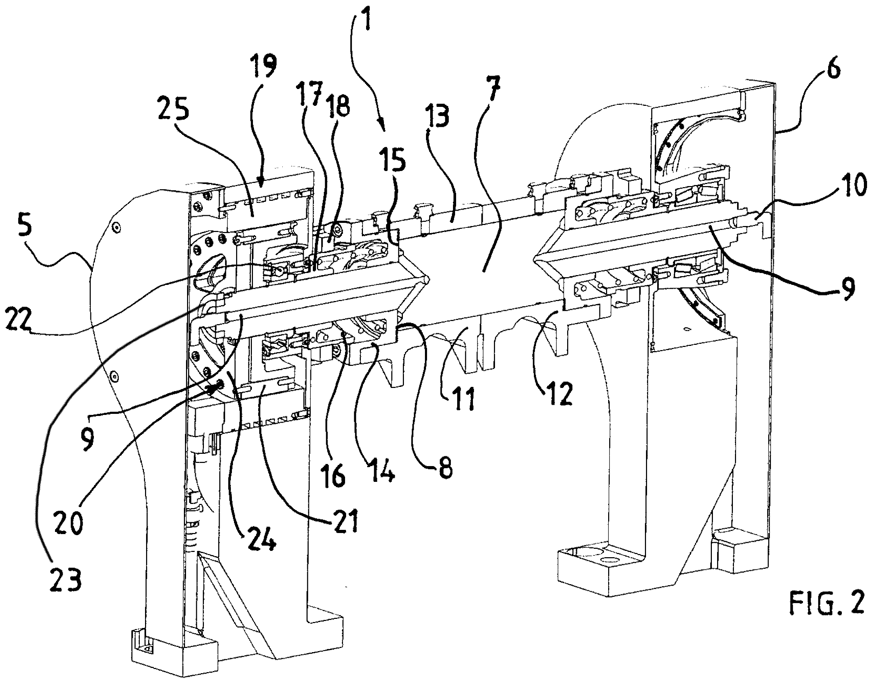

Ein in den Figuren 1 und 2 anhand einer Ausführungsform dargestellter erfindungsgemäßer Invertmechanismus 1 ist Bestandteil einer im Übrigen in den Figuren 1 bis 3 nicht dargestellten Glasform- bzw. Behälterglasmaschine, insbesondere einer sogenannten ISX-Glasformmaschine.

Bei derartigen Glasformmaschinen werden Glastropfen einzelnen Stationen der Glasformmaschine zugeführt. Jede dieser Stationen der Glasformmaschine kann eine Mehrzahl von Vor- und Fertigformen aufweisen. Die Glastropfen werden den in den Figuren 1 und 2 nicht dargestellten Vorformen der entsprechenden Station der Glasformmaschine zugeführt. Im Falle der in Figur 1 gezeigten Ausführungsform des Invertmechanismus 1 ist dieser einer Station der Glasformmaschine zugeordnet, die drei Vorformen aufweist. Von daher hat der Invertmechanismus 1 in der in Figur 1 gezeigten Ausführungsform zwei Mündungshaltearme 2, 3, die in ihrer in Figur 1 gezeigten aneinander angenäherten Schließstellung drei Mündungshalteringe 4 ausbilden. Jeder Mündungshaltering 4 ist dem Mündungsbereich eines in einer Vorform hergestellten Külbels zugeordnet. Mittels der Mündungshalteringe 4 der beiden Mündungshaltearme 2, 3 des Invertmechanismus 1 werden nach deren Herstellung die Mündungsbereiche der drei Külbel erfasst und - nach dem Öffnen der Vorformen - durch eine Schwenkbewegung der beiden Mündungshaltearme 2, 3 um 180 Grad den drei Fertigformen der betreffenden Station der Glasformmaschine zugeführt. Je nach Anzahl der Vor- und Fertigformen an einer Station einer Glasformmaschine kann der Invertmechanismus 1 für eine entsprechende Anzahl von Vor- und Fertigformen ausgelegt werden. Entsprechend ist es auch möglich, die gegenseitigen Abstände von an einer Station einer Glasformmaschine vorhandenen Vorformen bei der Auslegung der Mündungshaltearme 2, 3 des Invertmechanismus 1 zu berücksichtigen. Dies kann durch Mündungshaltearmeinsätze realisiert werden, die die gewünschte Anzahl von Mündungshalteringen 4 in dem gewünschten Abstand zueinander ausbilden. Üblicherweise hat eine Station einer entsprechenden Glasformmaschine eine bis fünf Vor- und Fertigformen.

Der Invertmechanismus 1 hat, wie aus den Figuren 1 und 2 hervorgeht, zwei Seitensäulen 5, 6, in denen die beiden Endabschnitte einer Zentralwelle 7 des Invertmechanismus 1 drehbar und axial fest gelagert sind. Die Zentralwelle 7 hat an ihrem mittleren Abschnitt, der außerhalb der beiden Seitensäulen 5, 6 angeordnet ist, einen Bereich größeren Durchmessers, an den sich beidseitig Bereiche kleineren Durchmessers anschließen. Zwischen dem Bereich größeren Durchmessers und den beiden Bereichen kleineren Durchmessers weist die Zentralwelle 7 entsprechend eine Radialstufe 8 auf. Durch jeden der beiden Bereiche kleineren Durchmessers der Zentralwelle 7 verläuft eine Bohrung 9, die sich im Bereich der entsprechenden Radialstufe 8 verzweigt, wobei sich die Abzweige in der der Radialstufe 8 zugeordneten Radialringfläche der Zentralwelle 7 öffnen. Die beiden Bohrungen 9 sind mittels jeweils eines Druckluftanschlusses 10 an eine Druckluftquelle angeschlossen und somit mit Druckluft beaufschlagbar.

Aus einer Zusammenschau der Figuren 1 und 2 geht hervor, dass die Mündungshaltearme 2, 3 drehfest und axial verschieblich an dem den größeren Durchmesser aufweisenden mittleren Bereich der Zentralwelle 7 gehaltert sind.

Jeder Mündungshaltearm 2, 3 hat einen Schlitten 11, 12 der mittels einer mit ihm einstückigen Schubhülse 13 axial beweglich und drehfest an der Zentralwelle 7 gehaltert ist. In der in den Figuren 1 und 2 gezeigten Schließstellung der beiden Mündungshaltearme 2, 3 liegen die beiden Schlitten 11, 12 mit ihren einander zugeordneten Endflächen aneinander an. An seinem diesen Endflächen abgewandten axialen Endabschnitt ist jeder Schlitten 11, 12 mit einer Federhalterung 14 versehen, die fest mit der Schubhülse 13 verbunden ist. Die Federhalterung 14 hat eine Stirnwand 15, die in der in den Figuren 1 und 2 gezeigten Schließstellung der Mündungshaltearme 2, 3 an der Radialstufe 8 der Zentralwelle 7 anliegt. An ihrer der Stirnwand 15 abgewandten Seite haltert die Federhalterung 14 ein schlittenseitiges Ende einer in Axialrichtung der Zentralwelle 7 wirkenden Feder 16. Mittels den Federn 16 werden die Schlitten 11, 12 in ihre in den Figuren 1 und 2 gezeigte, aneinander anliegende Stellung vorgespannt, in der die Mündungshaltearme 2, 3 ihre Schließstellung einnehmen und in der die Stirnwände 15 der Federhalterungen 14 an den Radialstufen 8 der Zentralwelle 7 anliegen. Die beiden Federhalterungen 14 sind axial verschieblich an den beiden Bereichen geringeren Durchmessers der Zentralwelle 7 gehaltert.

Die beiden Federn 16 sind an ihrem schlittenfernen Ende in einer Federendkappe 17 gehaltert. Die Federendkappe 17 ist dreh- und axialfest auf der Zentralwelle 7 angeordnet bzw. gehaltert. Die Feder 16 und der Abstand zwischen der Federendkappe 17 einerseits und der Radialstufe 8 der Zentralwelle 7 andererseits sind so aufeinander abgestimmt bzw. bemessen, dass die Feder 16 die ihr zugeordnete Federhalterung 14 des Schlittens 11 bzw. 12 in Richtung der Schließstellung der Mündungshaltearme 2, 3 drückt. Der Außendurchmesser der Federendkappe 17 ist an deren der Federhalterung 14 zugewandten Endabschnitt so bemessen, dass bei einer Bewegung des Schlittens 11, 12 in Richtung auf die Federendkappe 17 zu der entsprechende Endabschnitt der Federendkappe 17 innerhalb der Federhalterung 14, die einen entsprechend bemessenen Innendurchmesser aufweist, aufnehmbar ist. Zur Begrenzung der Axialbewegung des Schlittens 11, 12 ist jede Federendkappe 17 auf ihrer Außenumfangsfläche mit einem Anschlagglied 18 versehen. Eine Axialbewegung der Federhalterungen 14 in Richtung auf die Seitensäulen 5, 6 des Invertmechanismus 1 wird durch das jeweilige Anschlagglied 18 begrenzt, da eine dem Anschlagglied 18 zugewandten Stirnfläche der Federhalterung 14 in Anlage gegen dieses Anschlagglied 18 gerät.

Die Federendkappe 17 ist, wie bereits erwähnt, dreh- und axialfest mit der Zentralwelle 7 verbunden. Mittels der in den Figuren 1 und 2 links angeordneten Federendkappe 17 kann daher Antriebsenergie zur Drehung der Zentralwelle 7 und damit zur Schwenkung der Mündungshaltearme 2, 3 um die Mittelachse der Zentralwelle 7 auf die Zentralwelle 7 übertragen werden. Diese Antriebsenergie wird durch eine Antriebsvorrichtung 19 bzw. durch deren Motoreinheit 20 erzeugt. Die Antriebsvorrichtung 19 ist in der in den Figuren 1 und 2 linken Seitensäule 5 des Invertmechanismus 1 untergebracht. Diese Motoreinheit 20 ist als Rotationsmotor und im dargestellten Ausführungsbeispiel als Elektro Servo Torque Motor 20 ausgebildet. Zu diesem Elektro Servo Torque Motor 20 gehört ein Statorglied 25, das fest innerhalb der Seitensäule 5 gehaltert ist. Des Weiteren gehört zu dem Elektro Servo Torque Motor 20 ein Rotorglied 21, das mittels eines als Kugellager 22 ausgebildeten Rotationslagers drehbar in der Seitensäule 5 des Invertmechanismus 1 gelagert ist. Die in dem Elektro Servo Torque Motor 20 erzeugte Antriebsenergie wird als Rotationsbewegung des Rotorglieds 21 ohne Zwischenschaltung irgendwelcher Getriebe od. dgl. Mittel auf die Zentralwelle 7 übertragen. Hierzu ist das Rotorglied 21 drehfest mit einem Flansch 24 verbunden, der seinerseits dreh- und axialfest auf der Zentralwelle 7 gehaltert ist. Eine Rotationsbewegung des Rotorglieds 21 des Elektro Servo Torque Motors 20 wird somit quasi unmittelbar in eine Rotationsbewegung der Zentralwelle 7 und damit in eine Schwenkbewegung der Mündungshaltearme 2, 3 umgesetzt. Bei der in den Figuren 1 und 2 dargestellten Ausführungsform des Invertmechanismus 1 erfolgt die Übertragung der Antriebsenergie vom Rotorglied 21 des Elektro Servo Torque Motors 20 auf die Zentralwelle 7 sowohl über die in den Figuren 1 und 2 links angeordnete Federendkappe 17 als auch über den Flansch 24, wobei die Antriebsenergieübertragung hauptsächlich über den Flansch 24 realisiert wird.

Dem Elektro Servo Torque Motor 20 ist ein Encoder bzw. Inkrementgeber 23 zugeordnet, mittels dem während der gesamten Schwenkbewegung der Mündungshaltearme 2, 3 bzw. Rotationsbewegung der Zentralwelle 7, d.h. sowohl während der Invert- als auch während der Revertbewegung, die genaue aktuelle Schwenkstellung der Mündungshaltearme 2, 3 erfassbar ist. Darüber hinaus sind mittels des Encoders bzw. Inkrementgebers 23 auch die Rotationsgeschwindigkeit und die Winkelstellung der Zentralwelle 7 mess- bzw. erfassbar. Diese Werte können vom Encoder bzw. Inkrementgeber 23 an eine in den Figuren nicht dargestellte Steuervorrichtung der Glasformmaschine weitergeleitet werden. Mittels dieser Steuervorrichtung kann dann der Bewegungsablauf des Invertmechanismus 1, soweit er die Rotation der Zentralwelle 7 bzw. die Schwenkbewegung der Mündungshaltearme 2, 3 betrifft, über eine entsprechende Regelung der Antriebsvorrichtung 19 bzw. deren Elektro Servo Torque Motors 20 gesteuert werden. Entsprechend ist der Bewegungsablauf des Invertmechanismus 1 an unterschiedliche Gestaltungen bzw. Anordnungen von Vorformen und Fertigformen an einer Station einer Glasformmaschine anpassbar.

Bei der in den Figuren 1 und 2 gezeigten und vorstehend erläuterten Ausgestaltung des Invertmechanismus 1 können standardisierte Modulbauteile zum Einsatz kommen, wobei insbesondere ein Elektro Servo Torque Motor 20 in Standardbauweise zum Einsatz kommen kann.

Um die beiden Mündungshaltearme 2, 3 zur Öffnung der Mündungshalteringe 4 in Axialrichtung der Zentralwelle 7 so zu bewegen, dass sich die Schlitten 11, 12 der Mündungshaltearme 2, 3 voneinander entfernen, sodass die Mündungshaltearme 2, 3 aus der in den Figuren 1 und 2 gezeigten Schließstellung in eine Offenstellung geraten, wird durch die Druckluftanschlüsse 10, von denen einer an beiden Enden der Zentralwelle 7 vorgesehen ist, Druckluft in die Bohrungen 9 eingeleitet. Diese Druckluft beaufschlagt die an den Radialstufen 8 anliegenden Stirnwände 15 der Federhalterungen 14, die so gegen die Kraft der Federn 16 axial verschoben werden. Damit entfernen sich die Schlitten 11, 12 voneinander, wodurch die Mündungshalteringe 4 der Mündungshaltearme 2, 3 geöffnet werden. Sobald die Druckluftzufuhr durch die Druckluftanschlüsse 10 endet, werden mittels der beiden Federn 16 die beiden Federhalterungen 14 und damit die Schlitten 11, 12 wieder in die in den Figuren 1 und 2 gezeigte Stellung verbracht, in der die einander zugewandten Stirnflächen der Schlitten 11, 12 aneinander anliegen und entsprechend die Mündungshalteringe 4 der Mündungshaltearme 2, 3 geschlossen sind.

Selbstverständlich sind die Anschlagglieder 18 so an den Federendkappen 17 angebracht, dass beim Anschlag der Federhalterungen 14 an den Anschlaggliedern 18 die Offenstellung der Mündungshaltearme 2, 3 erreicht ist.

Mittels des vorstehend geschilderten Invertmechanismus 1 können in den Vorformen hergestellte Glaskülbel erfasst werden. Nach dem Öffnen der Vorformen können diese Glaskülbel dann durch eine Schwenkbewegung der Mündungshaltearme 2, 3 um 180 Grad zu den Fertigformen der betreffenden Station der Glasformmaschine verbracht werden. Nach Schließen der Fertigformen werden die Mündungshaltearme 2, 3 wieder in ihre Offenstellung verbracht und dann in einer Revertbewegung zurück zu den Vorformen verschwenkt, wo sie dann wieder in ihre Schließstellung verbracht werden können.

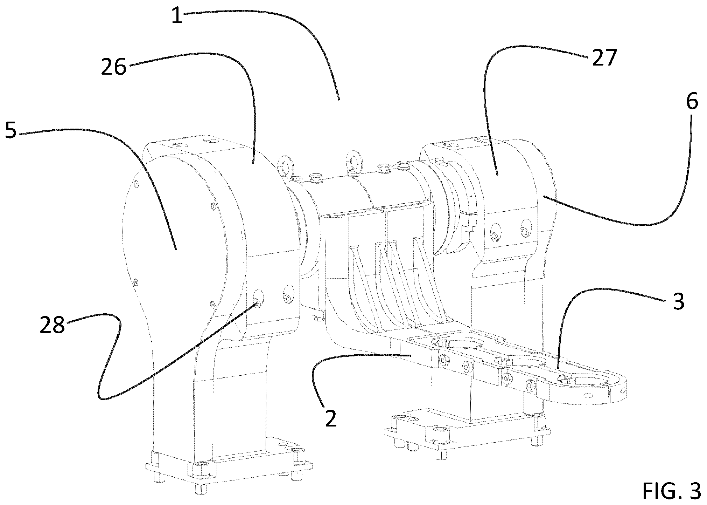

Eine in Figur 3 dargestellte weitere Ausführungsform des Invertmechanismus 1 unterscheidet sich von der vorstehend anhand der Figuren 1 und 2 beschriebenen Ausführungsform im Wesentlichen dadurch, dass die beiden Seitensäulen 5, 6 an ihrem jeweils oberen Bereich ein Deckelteil 26, 27 aufweisen. Die Deckelteile 26, 27 sind mittels Schrauben 28 lösbar mit den Seitensäulen 5, 6 verbunden. Nach dem Lösen der Deckelteile 26, 27 von den Seitensäulen 5, 6 ist die Zentralwelle 7 des Invertmechanismus 1 zugänglich. Sie kann in einfacher Weise ausgetauscht werden. Auch andere Service-, Wartungs-, Instandsetzungs- und Reparaturmaßnahmen am Invertmechanismus 1 können mit einem erheblich verringerten Aufwand durchgeführt werden.

## Patentansprüche

1. Invertmechanismus für eine zumindest eine Vorform aufweisende Glasformmaschine, mit zwei Mündungshaltearmen (2, 3), die zwischen einer einen Mündungsbereich eines in der zumindest einen Vorform geformten Külbels halternden Schließstellung und einer diesen Mündungsbereich freigebenden Offenstellung verstellbar sind, einer Zentralwelle (7), mit der die Mündungshaltearme (2, 3) drehfest verbunden sind und um deren Mittelachse die Mündungshaltearme (2, 3) aus einer der zumindest einen Vorform zugeordneten ersten Schwenkstellung in eine einer der zumindest einen Vorform zugeordneten Fertigform zugeordnete zweite Schwenkstellung verschwenkbar sind, und einer Antriebsvorrichtung (19) mit einer Motoreinheit (20), mittels der Antriebsenergie für die Verschwenkung der Mündungshaltearme (2, 3) zwischen ihrer ersten und ihrer zweiten Schwenkstellung erzeugbar ist, **dadurch gekennzeichnet, dass** die Motoreinheit der Antriebsvorrichtung (19) als Rotationsmotor (20) mit einem Statorglied (25) und einem Rotorglied (21) ausgebildet ist, und dass das Rotorglied (21) des Rotationsmotors (20) axial- und drehfest mit der Zentralwelle (7) der Antriebsvorrichtung (19) verbunden und der Rotationsmotor (20) koaxial in Bezug auf die Zentralwelle (7) der Antriebsvorrichtung (19) angeordnet ist.

2. Invertmechanismus nach Anspruch 1, bei dem das Rotorglied (21) des Rotationsmotors (20) fest mit einem Flansch (24) verbunden ist, der dreh- und axialfest auf der Zentralwelle (7) des Invertmechanismus (1) sitzt.

3. Invertmechanismus nach Anspruch 1 oder 2, bei dem der Rotationsmotor der Antriebsvorrichtung (19) als Servo Torque Motor, vorzugsweise als Elektro Servo Torque Motor (20), insbesondere als Elektro Servo Torque Motor in Standardbauweise, ausgebildet ist.

4. Invertmechanismus nach einem der Ansprüche 1 bis 3, bei dem jeder Mündungshaltearm (2, 3) fest mit einem Schlitten (11, 12) verbunden ist, der drehfest und in Axialrichtung verschieblich auf der Zentralwelle (7) gehaltert ist, und der vorzugsweise eine die Zentralwelle (7) der Antriebsvorrichtung (19) drehfest und koaxial umgebende Schubhülse (13) aufweist.

5. Invertmechanismus nach einem der Ansprüche 1 bis 4, bei dem der Kraftübertragungsweg zwischen dem Rotorglied (21) des Rotationsmotors (20) einerseits und den Mündungshaltearmen (2, 3) andererseits getriebe-, zahnrad-, ketten-, riemen- und zahnstangenfrei ausgebildet ist.

6. Invertmechanismus nach einem der Ansprüche 1 bis 5, dessen Zentralwelle (7) an ihren beiden Endabschnitten in einer Seitensäule (5, 6) des Invertmechanismus (1) gehaltert ist.

7. Invertmechanismus nach einem der Ansprüche 4 bis 6, bei dem jeder Schlitten (11, 12) an seinem dem anderen Schlitten (12, 11) abgewandten Endabschnitt eine Federhalterung (14) aufweist, in der ein schlittenseitiges Ende einer in Axialrichtung der Zentralwelle (7) wirkenden Feder (16) aufgenommen ist, wobei vorzugsweise der Federhalterung (14) jedes Schlittens (11, 12) eine Federendkappe (17) zugeordnet ist, in der ein schlittenfernes Ende der Feder (16) gehaltert und die dreh- und axialfest an der Zentralwelle (7) gehaltert ist und/oder die dem Rotationsmotor (20) zugewandte Federendkappe (17) fest mit dem Rotorglied (21) des Rotationsmotors (20) verbunden ist.

8. Invertmechanismus nach einem der Ansprüche 1 bis 7, bei dem zwischen dem Rotationsmotor (20) und der Zentralwelle (7) der Antriebsvorrichtung (19) ein Rotationslager, vorzugsweise ein Kugellager, angeordnet ist.

9. Invertmechanismus nach einem der Ansprüche 1 bis 8, bei dem auf der Außenumfangsfläche jeder Federendkappe (17) ein Anschlagglied (18) ausgebildet ist, mittels dem die Axialbewegung des der jeweiligen Federendkappe (17) zugeordneten Schlittens (11, 12) begrenzt ist.

10. Invertmechanismus nach einem der Ansprüche 4 bis 9, bei dem die beiden Schlitten (11, 12) mit Mündungshaltearmeinsätzen verbindbar sind, die miteinander ein, zwei, drei, vier oder fünf Mündungshalteringe (4) ausbilden.

11. Invertmechanismus nach einem der Ansprüche 3 bis 10, bei dem dem Elektro Servo Torque Motor (20) ein Encoder (23) zugeordnet ist, mittels dem während der gesamten Schwenkbewegung der Mündungshaltearme (2, 3) des Invertmechanismus (1) dessen genaue Winkelstellung und die Schwenkgeschwindigkeit der Mündungshaltearme (2, 3) erfassbar sind, und der vorzugsweise an eine Steuervorrichtung der Glasformmaschine angeschlossen ist, mittels der die Schwenkbewegung der Mündungshaltearme (2, 3) des Invertmechanismus (1) regelbar ist.

12. Invertmechanismus nach einem der Ansprüche 9 bis 11, bei dem Radialstufen (8) der Zentralwelle (7) zugeordnete Stirnwände (15) der Schlitten (11, 12) durch in der Zentralwelle (7) ausgebildete Bohrungen (9) mit Druckluft beaufschlagbar sind, um die Schlitten (11, 12) in Axialrichtung der Zentralwelle (7) gegen die Kraft der Federn (16) in Richtung auf die Anschlagglieder (18) zu verschieben.

13. Invertmechanismus nach Anspruch 12, bei dem die Zentralwelle (7) an beiden Enden an eine Druckluftquelle angeschlossen ist.

14. Invertmechanismus nach einem der Ansprüche 1 bis 13, dessen Antriebsvorrichtung (19) zwei Motoreinheiten (20) aufweist, von denen jede vorzugsweise an einem axialen Endabschnitt der Zentralwelle (7) angeordnet ist.

15. Invertmechanismus nach einem der Ansprüche 6 bis 14, dessen Seitensäulen (5, 6) an ihrem oberen Bereich jeweils ein lösbares, vorzugsweise abschraubbares Deckelteil (26, 27) aufweisen.
